# EUROPÄISCHE PATENTSCHRIFT

(11) **EP 1 344 500 B1**
(45) Veröffentlichungstag und Bekanntmachung des Hinweises auf die Patenterteilung: **01.06.2005**
(21) Anmeldenummer: 02005985.3
(22) Anmeldetag: 15.03.2002
(51) Int. Cl.: A61C 5/06, B65D 81/32, A61M 5/28

(54) **Mehrkomponenten-Mischkapsel, insbesondere für Dentalzwecke**
Multiple component mixing capsule, particularly for dental purpose
Capsule de mélange de plusieurs composants, en particulier pour l'art dentaire

(43) Veröffentlichungstag der Anmeldung: 17.09.2003
(73) Patentinhaber: Ernst Mühlbauer GmbH & Co.KG, 25870 Norderfriedrichskoog (DE)
(72) Erfinder: Hörth, Hans, 21147 Hamburg (DE); Jürgens, Matthias, 20255 Hamburg (DE)
(74) Vertreter: Glawe, Delfs, Moll & Partner

(56) Entgegenhaltungen:
- WO-A-00/10479
- WO-A-01/62317
- DE-A- 2 060 626
- DE-A- 3 723 985
- DE-A- 3 920 537
- US-A- 4 193 698
- US-A- 5 395 325
- DATABASE WPI Section Ch, Week 199954 Derwent Publications Ltd., London, GB; Class A17, AN 1999-628871 XP002210500 & JP 11 278582 A (DAINIPPON PRINTING CO LTD), 12. Oktober 1999 (1999-10-12)

## Beschreibung

Die Erfindung betrifft eine Mehrkomponenten-Mischkapsel gemäß Anspruch 1 mit Ausspritzeinrichtung für die gemischte Masse, für Dentalzwecke, mit einem eine Mischkammer mit Ausspritzöffnung bildenden Behälterteil, einem in dem Behälterteil verschiebbaren Kolben, der eine die Mischkammer an deren der Ausspritzöffnung abgewandten Ende begrenzende Lochwand und diesseits der Lochwand eine Aufnahmekammer für eine flüssige Komponente umfaßt, und einem in der Aufnahmekammer zum Entleeren der flüssigen Komponente in die Mischkammer mittels eines Werkzeugs verschiebbaren Stempel, wobei der Kolben gegenüber der den Stempel vorschiebenden Werkzeugkraft mittelbar oder unmittelbar an dem Werkzeug abstützbar ist, wobei ein das hintere, der Ausspritzöffnung ferngelegene Ende des Behälterteils im Ruhezustand überragender Teil des Kolbens einen eine Abstützfläche bildenden radialen Vorsprung aufweist.

Mit einer bekannten Mehrkomponenten-Mischkapsel dieser Art (DE 39 20 537 A1) können mehrere Komponenten miteinander vermischt werden und anschließend ausgebracht werden. Die mehreren Komponenten sind dabei zunächst getrennt. In der Mischkammer befindet sich insbesondere ein pulverförmiges Material, während eine zweite Komponente in Form einer Flüssigkeit in einem Folienbehälter eingeschlossen ist. Mit einem Werkzeug wird der Stempel in den Kolben hineingeschoben, der seine Stellung gegenüber dem Behälterteil zunächst nicht verändert. Dabei wird der Folienbehälter zerstört, und die Flüssigkeit wird durch den Stempel in die Mischkammer gedrückt. Anschließend wird die Mischkapsel aus dem Werkzeug entfernt und in ein übliches Vibrationsmischgerät eingesetzt. Nachdem die Komponenten so vermischt sind, wird die Mischkapsel wieder in das Werkzeug eingesetzt, und der Stempel wird weiter in den Behälterteil hineingedrückt. Dabei nimmt er den Kolben mit, dessen radialer Vorsprung nachgibt. Auf diese Weise wird die gemischte Masse aus der Mischkammer für die gewünschte Anwendung herausgedrückt.

Der Nachteil dieser vorbekannten Vorrichtung besteht darin, daß in Bezug auf das Volumen der Mischkapsel nur verhältnismäßig kleine Flüssigkeitsmengen verwendet werden können. Dies liegt daran, daß der Folienbehälter selbstverständlich nicht den ganzen Raum der Aufnahmekammer ausfüllen kann, sondern daß um den Folienbehälter herum ungenutzter Raum verbleibt.

Die Aufgabe der Erfindung besteht in der Schaffung einer Mischkapsel der eingangs genannten Art, in der im Vergleich zu gleichgroßen Mischkapseln des Standes der Technik eine wesentlich größere Menge der flüssigen Komponente untergebracht werden kann.

Die erfindungsgemäße Lösung besteht darin, daß die Lochwand des Kolbens an ihrer Außenseite mit einer Folie und einer die Folie zwischen sich und der Lochwand einschließenden Lochscheibe abgeschlossen ist.

Die flüssige Komponente ist also nicht mehr in einem Folienbehälter angeordnet, sondern kann den gesamten Aufnahmeraum des Kolbens ausfüllen. Der Kolben ist dabei auf der einen Seite durch den Stempel verschlossen, während er auf der anderen Seite, an der er eine Lochwand aufweist, mit einer Folie verschlossen ist. Diese Folie ist dabei zwischen der Lochwand und einer Lochscheibe eingeschlossen, die von außen auf die Folie aufgebracht ist.

Es ist zwar bekannt, entsprechende Kolben mit einer Folie abzuschließen. Ist aber auf der Lochwand lediglich eine Folie ohne sonstige Maßnahmen aufgebracht (WO 00/10479), so besteht die große Gefahr, daß die Folie unkontrolliert abreißt und Bruchstücke der Folie in die gemischte Masse gelangen können.

Es ist zwar bekannt, bei medizinischen Spritzen, bei denen in verschiedenen Abteilungen untergebrachte Substanzen durch Schütteln von Hand gemischt werden sollen, eine die Abteile trennende Folie zwischen der Lochwand und einer Lochscheibe einzuschließen (US-A-5395325). Eine solche Spritze ist aber nicht für die Mischung von Dentalmassen in einem Vibrationsmischer bestimmt.

Das Verschließen mit der Folie erfolgt dabei zweckmäßigerweise, nachdem die Aufnahmekammer des Kolbens mit der flüssigen Komponente gefüllt ist. Dies hat gegenüber einem Verfahren, bei dem die Folie erst aufgebracht wird, dann die flüssige Komponente eingebracht wird und schließlich der Stempel eingesetzt wird, den Vorteil, daß ein kompressionsfreies Befüllen möglich ist. Wird nämlich erst die Flüssigkeit eingefüllt, so besteht beim Einsetzen des Stempels die Gefahr, daß die Folie aufgrund des erzeugten Überdrucks reißt. Außerdem können Luftreste in der Aufnahmekammer verbleiben, die die Menge des nutzbaren Flüssigkeitsvolumens verringern. Nachdem die Folie auf die Lochwand des Kolbens aufgesetzt wurde, wird die Lochscheibe auf die Folie aufgebracht. Durch das Loch der Lochscheibe wird dann genau ein Querschnittsbereich definiert, in dem die Folie platzen kann. Auf diese Weise wird der zerstörte Bereich der Folie sehr klein gehalten, so daß kaum die Gefahr besteht, daß Teile der Folie in die gemischte Masse gelangen. Außerdem kann durch die Größe des Lochs der Lochscheibe der Druck bestimmt werden, bei dem die Folie reißt. Dies kann insbesondere in Abhängigkeit von Parametern wie der Viskosität der Flüssigkeit geschehen.

Vorteilhafterweise ist die Folie eine Aluminiumfolie. Aluminium hat dabei den Vorteil, als gute Dampfsperre für die Dämpfe der flüssigen Komponente zu wirken. Damit die Folie mit der Lochwand und der Lochscheibe, die vorteilhafterweise aus Kunststoff bestehen, verschweißt werden kann, ist die Folie dabei kunststoffbeschichtet. Man könnte auch lediglich Kunststoffolien verwenden, was die Anordnung einfacher macht. Der Nachteil der geringeren Dampfsperrenwirkung kann dabei wenigstens zum Teil dadurch behoben werden, daß biaxial gereckte Kunststoffolien verwendet werden.

Im Falle solcher Kunststoffolien oder kunststoffbeschichteten Aluminiumfolien kann die Folie mit der Lochwand und/oder der Lochscheibe verschweißt werden, insbesondere mit Ultraschall verschweißt werden, um übermäßige Wärme zu vermeiden, die die flüssige Komponente zum Verdampfen bringen könnte oder sonstige nachteilige Wirkungen haben könnte. Andererseits kann die Folie mit der Lochwand und/oder der Lochscheibe aber auch verklebt werden.

Eine andere Möglichkeit, bei der möglicherweise auf Verschweißen oder Verkleben verzichtet werden kann, ist es, die Folie durch die Lochscheibe mechanisch festzuhalten und die Folie mit einer Labyrinthdichtung durch die Lochscheibe an die Lochwand zu drücken. Auch eine Kombination dieser Befestigungsverfahren ist selbstverständlich möglich. Die Möglichkeiten, die Folie zu befestigen und abzudichten, werden auch unter Berücksichtigung weiterer Umstände auszuwählen sein. Bei einer mit Kunststoff beschichteten Aluminiumfolie liegt an den Schnittstellen das Aluminium frei, so daß die Gefahr besteht, daß eine chemische Reaktion zwischen dem Aluminium und Säuren auftritt. Dieser Bereich muß daher versiegelt, verschweißt oder verklebt werden, so daß die flüssige Komponente nicht mit dem Aluminium in Berührung kommen kann. Die Verbindung könnte z.B. mit einem Siegellack oder einem Schnellkleber vorgenommen werden. Um die Wirkung des am Stempel vorhandenen Dichtrings auch über längere Zeiträume zu gewährleisten sowie einer möglichen Ermüdung des Dichtrings entgegenzuwirken, kann der Dichtring oder der gesamte Stempel mit Siegellack überzogen werden.

Durch die Erfindung wird wie erwähnt der große Vorteil erzielt, daß größere Mengen der flüssigen Komponente in der Mischkapsel angeordnet werden können. Während bei vergleichbaren Mischkapseln bisher nur 100 mg Flüssigkeit eingebracht werden können, ist bei gleich großen erfindungsgemäßen Mischkapseln eine Menge von 300 bis 400 mg Flüssigkeit möglich.

Die Erfindung wird im folgenden anhand von vorteilhaften Ausführungsformen unter Bezugnahme auf die beigefügten Zeichnungen beschrieben. Es zeigen:
- Fig. 1: eine erfindungsgemäße Mischkapsel in Explosionsansicht;
- Fig. 2: die Mischkapsel der Fig. 1 im Querschnitt in verschiedenen Stadien der Verwendung;
- Fig. 3: eine andere Ausführungsform der erfindungsgemäßen Mischkapsel in verschiedenen Stadien der Verwendung; und
- Fig. 4: eine vorteilhafte Befestigungsart der Folie an der Lochwand des Kolbens.

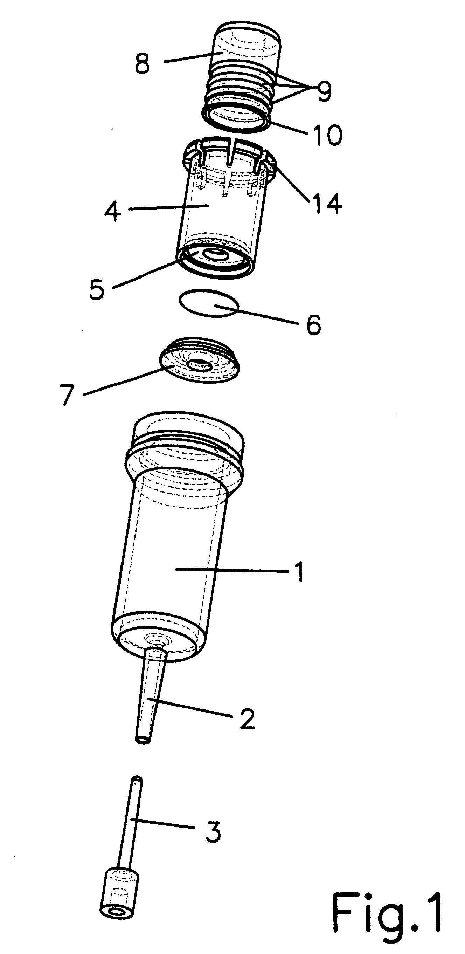

Wie dies in den Fig. 1 bis 3 gezeigt ist, weist die Mehrkomponenten-Mischkapsel einen Behälterteil 1 auf, der einen Ausströmkanal 2 für die gemischte Masse aufweist, der durch eine Nadel 3 verschlossen werden kann. In den Behälterteil 1 kann ein Kolben 4 eingesetzt werden, der oben offen ist und unten eine Lochwand 5 aufweist. Das Loch der Lochwand 5 kann dabei durch eine Folienscheibe 6, insbesondere aus kunststoffbeschichtetem Aluminium, verschlossen werden, wobei auf die Folienscheibe 6 dann eine Lochscheibe 7 aufgebracht werden kann, um die Folie mechanisch am Rand gut abzustützen und ein kontrolliertes Aufbrechen nur innerhalb des Lochs der Lochscheibe 7 zu gestatten. In das obere offene Ende des Kolbens 4 kann ein Stempel 8 eingesetzt werden, der Führungsringe 9 und einen Dichtring 10 aufweist.

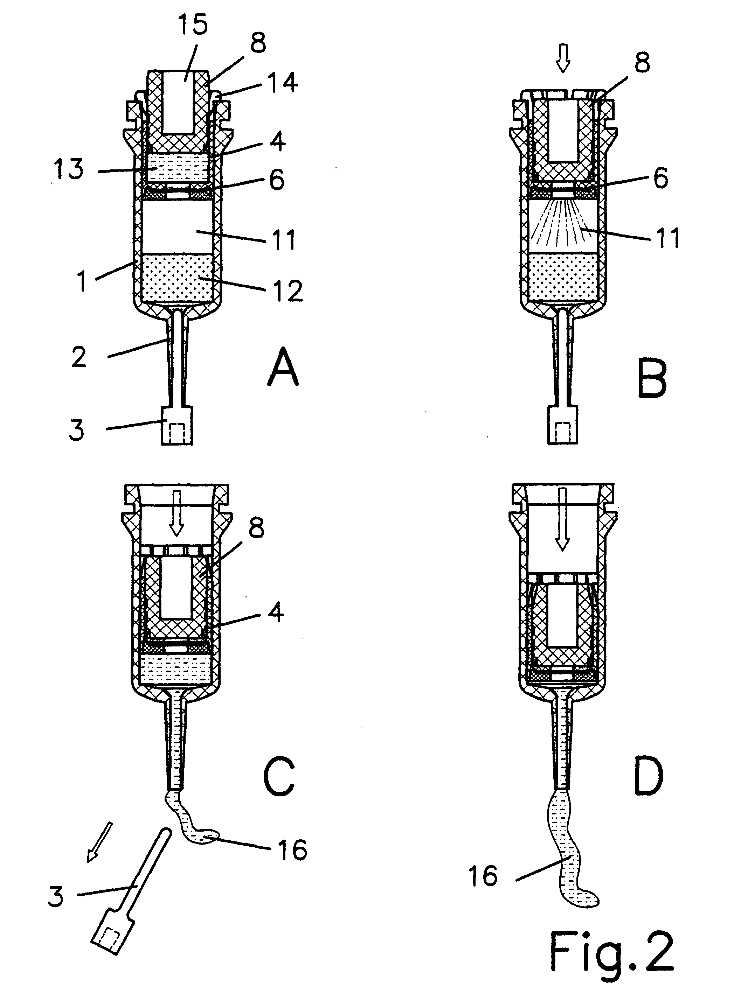

Zum Befüllen der Mischkapsel wird zunächst der Stempel 8 in den Kolben 4 eingesetzt. Mit nach oben gerichteter Lochwand 5 wird dann die flüssige Komponente in die Aufnahmekammer des Kolbens 4 eingefüllt. Anschließend wird die Folienscheibe 6 auf die Lochwand 5 aufgebracht und mechanisch mit Hilfe der Lochscheibe 7 festgehalten. Die Folie 6 kann dabei durch Kleben, Verschweißen (insbesondere UltraschallVerschweißen), Versiegeln oder dergleichen sowohl an der Lochwand 5 als auch an der Lochscheibe 7 befestigt werden. Die Lochscheibe 7 kann durch eine Schraubverbindung, eine Schnapp-Rast-Verbindung oder dergleichen zusätzlich mechanisch gesichert werden. Nachdem dann in die Mischkammer des Behälterteils 1 die andere Komponente eingefüllt ist, wird der Kolben 4 in den Behälter eingesetzt. Man erhält dann die in Fig. 2 unter A dargestellte Konfiguration, in der sich in der Mischkammer 11 eine Komponente 12, insbesondere ein Pulver 12 befindet, während im Aufnahmeraum 13 des Kolbens 4 die flüssige Komponente angeordnet ist. Der Kolben 4 stützt sich dabei auf dem Behälterteil 1 mit Hilfe eines ringförmigen Vorsprungs 14 ab. Zum Gebrauch wird die Mischkapsel in ein nicht gezeigtes Werkzeug eingesetzt, das den mit einer Bohrung 15 versehenen Stempel 8 in den Kolben 4 drückt. Der Kolben 4 wird dabei durch seinen ringförmigen Vorsprung 14 festgehalten, und es wird nur der Stempel 8 nach unten gedrückt. Wie dies in Fig. 2 bei B gezeigt ist, zerreißt dabei die Folie 6, und die Flüssigkeit kann in die Mischkammer 11 eindringen. Ist der in Fig. 2 bei B gezeigte Zustand erreicht, wird die Mischkapsel aus dem Werkzeug herausgenommen und in einen Vibrationsmischer eingesetzt.

Nachdem die Mischung durchgeführt worden ist, wird die Mischkapsel erneut in das Werkzeug eingesetzt, und der Stempel 8 wird durch das Werkzeug weiter nach unten gedrückt, nachdem die Verschlußnadel 3 entfernt worden ist. Dabei gibt der Ringvorsprung 14, der aus entsprechend weichem Material ist, nach, so daß auch der Kolben 4 nach unten gedrückt wird, so daß die gemischte Masse 16 aus dem Kanal 2 austreten kann. Dieser Zustand ist in Fig. 2 unter C gezeigt, während bei D der Fall gezeigt ist, daß die gemischte Masse 16 völlig aus der Mischkapsel herausgedrückt ist.

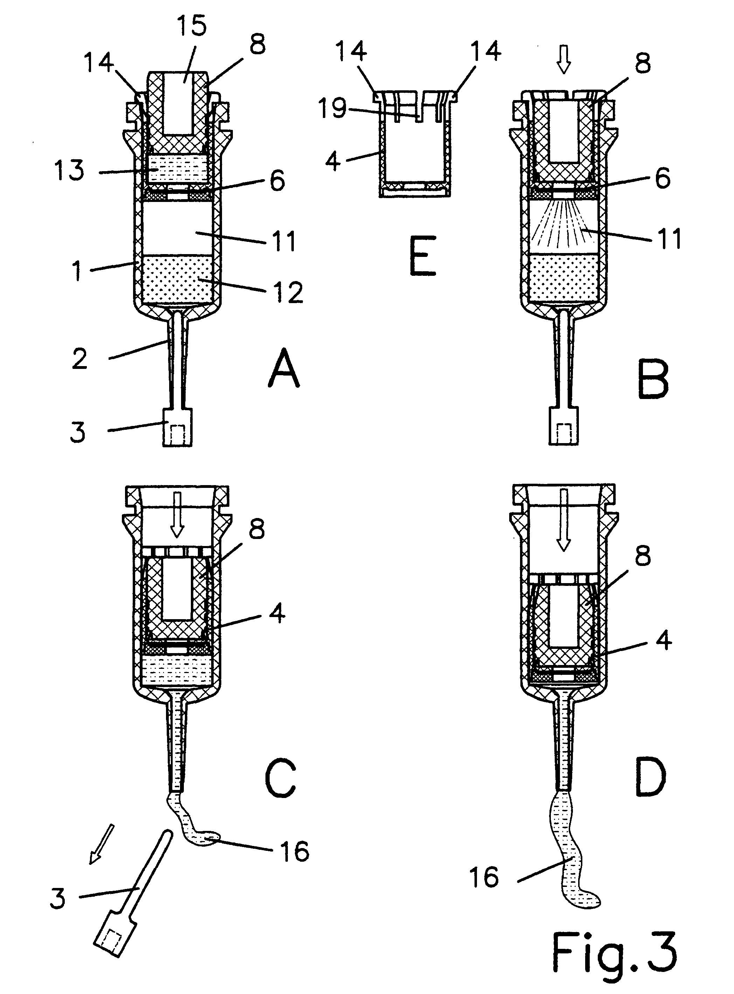

Die Ausführungsform der Fig. 3 entspricht im wesentlichen derjenigen der Fig. 2. Ein Unterschied besteht jedoch darin, daß nicht ein Vorsprung 14 am Kolben 4 vorgesehen ist, sondern mehrere Vorsprünge 14, die an zungenförmigen Enden 19 angeordnet sind, die beim Hereindrücken des Kolbens 4 in den Behälterteil 1 nachgeben können. Dieser Stempel ist in Fig. 3 bei E gezeigt. Die Darstellungen der Fig. A, B, C und D in Fig. 3 entsprechen ansonsten den Darstellungen der Fig. 2.

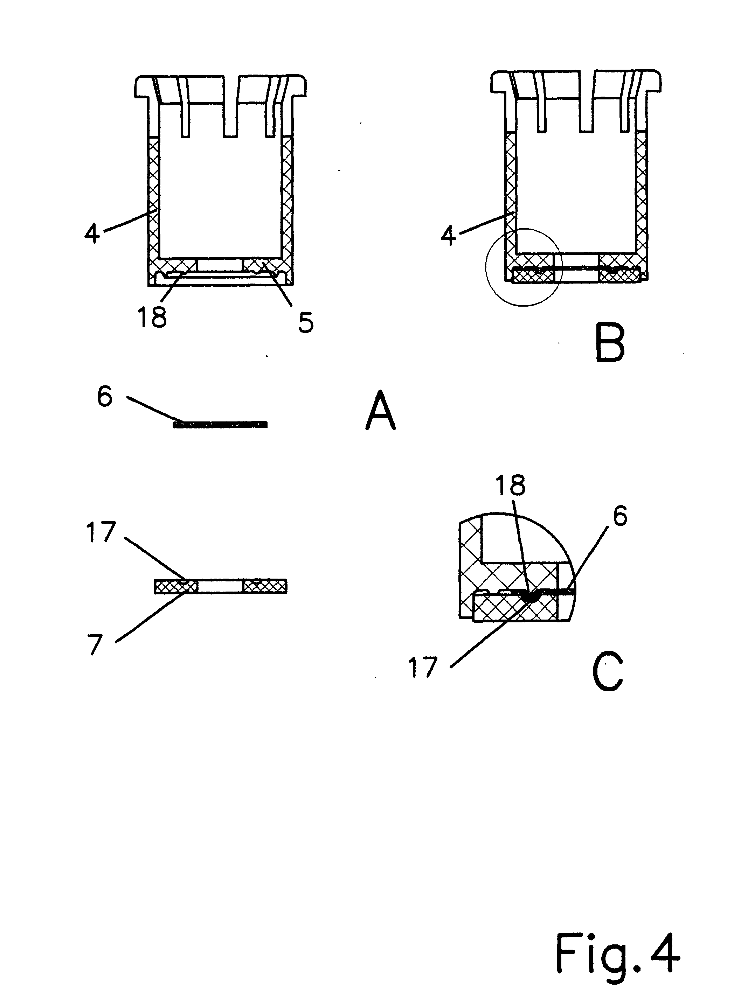

Wie gesagt, kann die Folienscheibe 6 an der Lochwand 5 und/oder der Lochscheibe 7 durch Verkleben, Verschweißen, Versiegeln und dergleichen befestigt werden, um so die Aufnahmekammer 13 für die flüssige Komponente zuverlässig abzudichten. Statt dessen oder zusätzlich kann eine Labyrinthdichtung vorgesehen werden, wie sie in Fig.4 gezeigt ist. In Fig. 4 sind bei A der Kolben 4, die Folienscheibe 6 und die Lochscheibe 7 vor dem Zusammenbau gezeigt. Die Lochscheibe 7 weist dabei kreisförmige Ausnehmungen 17 und die Lochwand 5 entsprechende komplementäre kreisförmige Erhebungen 18 auf. Zwischen diesen wird im fertig montierten Zustand, wie dies bei B gezeigt ist, die Folie 6 eingeklemmt. Bei C ist in Fig. 4 dabei der durch einen Kreis bezeichnete Ausschnitt der Darstellung B vergrößert dargestellt.

## Patentansprüche

1. Mehrkomponenten-Mischkapsel für Dentalzwecke mit Ausspritzeinrichtung für die gemischte Masse (16), mit einem eine Mischkammer (11) mit Ausspritzöffnung (2) bildenden Behälterteil (1), einem in dem Behälterteil (1) verschiebbaren Kolben (4), der eine die Mischkammer (11) an deren der Ausspritzöffnung (2) abgewandten Ende begrenzende Lochwand (5) und diesseits der Lochwand (5) eine Aufnahmekammer (13) für eine flüssige Komponente umfaßt, und einem in der Aufnahmekammer (13) zum Entleeren der flüssigen Komponente in die Mischkammer (11) mittels eines Werkzeugs verschiebbaren Stempel (8), wobei der Kolben (4) gegenüber der den Stempel (8) vorschiebenden Werkzeugkraft mittelbar oder unmittelbar an dem Werkzeug abstützbar ist, wobei ein das hintere, der Ausspritzöffnung (2) ferngelegene Ende des Behälterteils (1) im Ruhezustand überragender Teil (14) des Kolbens (4) einen eine Abstützfläche bildenden radialen Vorsprung (14) aufweist, wobei die Lochwand (5) des Kolbens (4) an ihrer Außenseite mit einer Folie (6) abgeschlossen ist, **dadurch gekennzeichnet, daß** der radialen Vorsprung (14) nachgibt, wenn der Stempel (8) weiter in den Behälterteil (1) hineingedrückt wird und **daß** eine die Folie (6) zwischen sich und der Lochwand (5) einschließende Lochscheibe (7) vorgesehen ist.

2. Mehrkomponenten-Mischkapsel nach Anspruch 1, **dadurch gekennzeichnet, daß** die Folie (6) eine kunststoffbeschichtete Aluminiumfolie ist.

3. Mehrkomponenten-Mischkapsel nach Anspruch 1, **dadurch gekennzeichnet, daß** die Folie (6) eine biaxial gereckte Kunststoffolie ist.

4. Mehrkomponenten-Mischkapsel nach einem der Ansprüche 1 bis 3, **dadurch gekennzeichnet, daß** die Folie (6) mit der Lochwand (5) und/oder der Lochscheibe (7) verschweißt ist, insbesondere mit Ultraschall verschweißt ist.

5. Mehrkomponenten-Mischkapsel nach einem der Ansprüche 1 bis 3, **dadurch gekennzeichnet, daß** die Folie (6) mit der Lochwand (5) und/oder der Lochscheibe (7) verklebt ist.

6. Mehrkomponenten-Mischkapsel nach einem der Ansprüche 1 bis 5, **dadurch gekennzeichnet, daß** die Folie (6) mit einer Labyrinthdichtung (17, 18) an der Lochwand (5) und/oder der Lochscheibe (7) anliegt.

7. Mehrkomponenten-Mischkapsel nach einem der Ansprüche 1 bis 6, **dadurch gekennzeichnet, daß** mehrere radiale Vorsprünge (14) an sich in Axialrichtung des Kolbens (4) erstreckenden nachgiebigen Zungen (19) angeordnet sind.

8. Mehrkomponenten-Mischkapsel nach einem der Ansprüche 1 bis 7, **dadurch gekennzeichnet, daß** Dichtungen (10, 17, 18) des Kolbens (4) oder Stempels (8) mit Siegellack überzogen sind.

## Claims

1. A multi-component mixing capsule for dental purposes, with a dispensing device for the mixed compound (16), with a container part (1) forming a mixing chamber (11) which has a dispensing opening (2), with a piston (4) which is displaceable in the container part (1) and which has a holed wall (5) delimiting the mixing chamber (11) at its end remote from the dispensing opening (2) and, on this side of the holed wall (5), has a receiving chamber (13) for a liquid component, and with a ram (8) which, by means of a tool, can be displaced in the receiving chamber (13) for the purpose of emptying the liquid component into the mixing chamber (11), the piston (4) being supportable directly or indirectly on the tool in relation to the tool force pushing the ram (8) forward, a part (14) of the piston (4) which, in the rest state, protrudes beyond the rear end of the container part (1) remote from the dispensing opening (2), having a radial projection (14) which forms a support surface, the holed wall (5) of the piston (4) being sealed off on its outside with a foil (6), **characterized in that** the radial projection (14) yields, if the ram (8) is further pushed into the container part (1) and that a holed disk (7) is provided which encloses the foil (6) between itself and the holed wall (5).

2. The multi-component mixing capsule as claimed in claim 1, **characterized in that** the foil (6) is a plastic-coated aluminum foil.

3. The multi-component mixing capsule as claimed in claim 1, **characterized in that** the foil (6) is a biaxially stretched plastic foil.

4. The multi-component mixing capsule as claimed in one of claims 1 through 3, **characterized in that** the foil (6) is welded to the holed wall (5) and/or the holed disk (7), in particular welded by ultrasound.

5. The multi-component mixing capsule as claimed in one of claims 1 through 3, **characterized in that** the foil (6) is adhesively bonded to the holed wall (5) and/or the holed disk (7).

6. The multi-component mixing capsule as claimed in one of claims 1 through 5, **characterized in that** the foil (6) bears via a labyrinth seal (17, 18) on the holed wall (5) and/or the holed disk (7).

7. The multi-component mixing capsule as claimed in one of claims 1 through 6, **characterized in that** a plurality of radial projections (14) are arranged on resilient tongues (19) extending in the axial direction of the piston (4).

8. The multi-component mixing capsule as claimed in one of claims 1 through 7, **characterized in that** seals (10, 17, 18) of the piston (4) or ram (8) are covered with sealing wax.

## Revendications

1. Capsule de mélange de plusieurs composants à usage dentaire avec un dispositif d'éjection pour la masse mélangée (16), avec une partie de réservoir (1) formant une chambre de mélange (11) avec un orifice d'éjection (2), un piston (4) coulissant dans la partie de réservoir (1), qui comprend une paroi percée (5) délimitant la chambre de mélange (11) à l'extrémité de celle-ci située à l'opposé de l'orifice d'éjection (2) et de ce côté-ci de la paroi (5) une chambre de réception (13) pour un composant liquide, et un poussoir (8) coulissant dans la chambre de réception (13) au moyen d'un outil pour déverser le composant liquide dans la chambre de mélange (11), dans laquelle le piston (4) peut s'appuyer indirectement ou directement sur l'outil par rapport à la force de l'outil faisant avancer le poussoir (8), dans laquelle une partie (14) du piston (4) dépassant au repos l'extrémité arrière de la partie de réservoir (1) éloignée de l'orifice d'éjection (2) présente une saillie radiale (14) formant une face d'appui, dans laquelle la paroi percée (5) du piston (4) est fermée sur son côté extérieur par une feuille (6), **caractérisée en ce que** la saillie radiale (14) cède lorsque le poussoir (8) est poussé plus loin dans la partie de réservoir (1) et **en ce qu'**il est prévu une rondelle percée (7) enfermant la feuille (6) entre elle et la paroi percée (5).

2. Capsule de mélange de plusieurs composants selon la revendication 1, **caractérisée en ce que** la feuille (6) est une feuille d'aluminium revêtue de matière plastique.

3. Capsule de mélange de plusieurs composants selon la revendication 1, **caractérisée en ce que** la feuille (6) est une feuille de matière plastique tendue de façon biaxiale.

4. Capsule de mélange de plusieurs composants selon l'une quelconque des revendications 1 à 3, **caractérisée en ce que** la feuille (6) est soudée à la paroi percée (5) et/ou à la rondelle percée (7), en particulier soudée aux ultrasons.

5. Capsule de mélange de plusieurs composants selon l'une quelconque des revendications 1 à 3, **caractérisée en ce que** la feuille (6) est collée à la paroi percée (5) et/ ou à la rondelle percée (7).

6. Capsule de mélange de plusieurs composants selon l'une quelconque des revendications 1 à 5, **caractérisée en ce que** la feuille (6) est appliquée avec un joint labyrinthe (17, 18) sur la paroi percée (5) et/ou sur la rondelle percée (7).

7. Capsule de mélange de plusieurs composants selon l'une quelconque des revendications 1 à 6, **caractérisée en ce que** plusieurs saillies radiales (14) sont disposées sur des languettes flexibles (19) s'étendant dans la direction axiale du piston (4).

8. Capsule de mélange de plusieurs composants selon l'une quelconque des revendications 1 à 7, **caractérisée en ce que** des joints (10, 17, 18) du piston (4) ou du poussoir (8) sont revêtus d'une laque de colmatage.
